# EUROPEAN PATENT APPLICATION

(11) **EP 3 936 485 A1**
(43) Date of publication of application: **12.01.2022**
(21) Application number: 20184221.8
(22) Date of filing: 06.07.2020
(51) Int. Cl.: C03C 15/00, C03C 17/32, C03C 21/00, C03C 23/00, E05D 1/02

(54) **FLEXIBLE GLASS ELEMENT AND METHOD FOR PRODUCING THE SAME**

(71) Applicant: SCHOTT AG, 55122 Mainz (DE)
(72) Inventor: ORTNER, Andreas, 55435 Gau-Algesheim (DE); WEISSHUHN, Dr. Julia, 55122 Mainz (DE); WAGNER, Fabian, 55118 Mainz (DE); HEISS-CHOUQUET, Dr. Markus, 65474 Bischofsheim (DE); SEIBERT, Volker, 65239 Hochheim am Main (DE); HE, Feng, Suzhou New District, Jiangsu 215011 (CN); HILLER, Vanessa, 55130 Mainz (DE); DA, Ning, Suzhou (CN); XIAO, Wei, New District, Suzhou 215011 (CN)
(74) Representative: Blumbach · Zinngrebe Patentanwälte PartG mbB

(57) **Abstract**

It is an object of the invention to provide elements of a brittle inorganic material, which are both highly flexible and have a high strength. For this purpose, an element (1) of an anorganic brittle material is provided having two opposed sides (3, 5) and a circumferential edge (7), the element (1) comprising at least three sections, the at least three sections including a first section (9) and two second sections (11, 13), the second sections adjoining the first section so that the first section (9) is arranged between the second sections (1, 13), the first section (9) comprising an arrangement of openings (90) forming passages from one side (3) to the opposed side (5) of the element so that the first section (9) has a higher flexibility than the second sections (11, 13).

## Description

The invention concerns plate shaped glass elements in general. In particular, the invention relates to a glass element with a high flexibility.

Glass is a material that uniquely combines transparency, hardness and temperature stability. Additionally, glass can withstand high pressure forces. On the other hand, glass is a brittle material and may break unpredictably if subjected to tensile stress. Thus, glass is not the material of choice if a high flexibility is requested. However, there are many potential applications, which would greatly benefit if the superior features of glass could be combined with a high flexibility. One technical field in this regard is the development of flexible optical displays, e.g. for foldable smart phones.

One possibility to make glass flexible is to reduce its thickness. However, this also reduces its strength against impact. The reduced strength can be compensated by a sandwich design, which combines two or more thin glass and polymer elements. However, a sandwich construction may have other drawbacks such as proneness for delamination or reduced light transmission due to the increased number of interfaces with refractive index steps. The pros and cons as discussed above not only apply to glass as a material but also to other brittle inorganic materials.

It is therefore an object of the invention to provide elements of a brittle inorganic material, which are both highly flexible and have a high strength.

Accordingly, an element of an inorganic brittle material having two opposed sides and a circumferential edge is provided. With the opposed sides and the edge of lower height the element is generally flat or plate shaped. The element has at least three sections, wherein the at least three sections include a first section and two second sections, the second sections adjoining the first section so that the first section is arranged between the second sections. The first section comprises an arrangement of openings ending in both opposed sides, i.e. forming passages through the element, i.e. extend from one side to the opposed side of the element. This way, the first section has a higher flexibility than the second sections. The openings are preferably arranged side by side in lines. The adjacent openings within one line are separated by first webs and the openings of adjacent lines are separated by second webs. Further, the first webs of adjacent lines are arranged offset to each other. In other words, the first webs are staggered from line to line.

In a preferred embodiment, the lines of openings are rectilinear, or comprise at least a rectilinear section, respectively. Thus, in this embodiment, the lines are strait rows of openings arranged side by side. This way, the first section can form a hinge for the second sections.

Typically, when a thin glass plate is bent, the convex surface is subjected to tensile stress. However, by introducing cuts or openings, respectively, a straight connection along the bending line is interrupted and the bending moment is mainly transmitted through the webs. The first and second webs form a structure similar in design like the joints in a brickwork. This staggered arrangement of the first webs produces torsional stress within the second webs when the element is bend. However, torsion produces much lower tensile stress to the material compared to bending. Thus, by absorbing the bending force at least partly by torsion of the webs, the overall tensile stress can be reduced. This way, the element can be easily bent without breakage.

At least one of the second sections, in particular both second sections preferably have a closed surface, i.e. do not have openings in the brittle material that extend through the element so that the openings end in both opposite side faces. Further, the surface of this section is preferably flat. However, in some embodiments the surface may also be structured, e.g. by including at least one of ribs, protrusions, indentations.

To improve the flexibility, it is preferred that the webs have a width that is smaller than the width of the openings in longitudinal direction of the lines of openings.

Further, to facilitate bending the element about the intermediate flexible section, it is preferred that the openings are oblong. In particular, the longitudinal direction of the openings is preferably oriented in direction along a boundary line between the first section and a second section.

For a given width of the second web, the ratio of the web length to the thickness of the element increases with the length of the longitudinal openings. A large ratio is advantageous for a high flexibility. However, a mesh comprising webs with high length and low thickness may also be constructed without oblong openings. Thus, independent from the shape of the openings, according to one embodiment of the element, the second webs have a length that is at least twice their thickness or the thickness of the element, respectively.

The most preferred material for the element is glass. However, it is also contemplated to fabricate the element using another brittle material such as a glass ceramics, sapphire or a semiconductor such as silicon.

Independent from the material used, the element may be easily bend and even folded at the flexible first section. Thus, it is also contemplated to provide an article comprising a flat element according to this disclosure, whereby the flat element is bent and folded at the first section so that the surfaces of the second sections of one of the sides face each other. Further, the element may be easily bent so far that the surfaces of the second sections facing each other are parallel or are at least positioned in an acute angle.

As well, the second sections can be brought close together, specifically if the flexible first section is sufficiently broad. The second sections can be positioned close together if the flexible first section has the freedom to bulge outwards. Thus, according to a refinement, the flat element is folded and the surfaces of the second sections facing each other are positioned so close together that the first section bulges outward so that the thickness of the folded flat element is larger at the first section than at the boundary lines between the first section and the second sections. As well, the thickness of the folded flat element in this case is larger at the first section than at a position where the second sections are opposed.

A particular high flexibility of the first section can be achieved with an embodiment wherein the openings are oblong and have a varying width along their longitudinal direction. Specifically, according to this embodiment the width measured along the longitudinal direction and starting from one end of the opening has two maxima and an intermediate minimum having a width that is smaller than the widths of the maxima. In other words, the oblong or elongated openings may have two maxima of the width that are spaced apart in longitudinal direction, with an intermediate minimum of the width located between the two maxima. Similarly, the second webs, which extend between the lines of openings and hence along the longitudinal direction of the openings may have a varying width. This may in particular be the case if the openings are formed as described above, i.e. with openings having an intermediate minimum of the width in between two maximas. Specifically, the second webs may have a shape that has two minima of the width, the minima being spaced apart in longitudinal direction of the web, wherein an intermediate maximum of the width is located between the minima of the width of the web.

Generally, with a section structured with openings as described herein, the maximum tensile strain upon a bent of the structured openings can be reduced by at least 50% of the value within a bent of an unstructured element of the same dimensions.

The decrease of maximum tensile strain can improve the flexibility of the structured section significantly. The flexibility of a glass can usually be expressed as the breakage bending gap in 2 point bending test. According to a preferred embodiment, the flexibility of the structured part, i.e. the first section is at least 2 times, preferably at least 3 times, most preferably at least 4 times higher compared to the non-structured part, i.e. the second sections. The 2 point bending is a test to measure the bending strength or bending performance of glass. The breakage bending radius is determined by using a UTM (universal testing machine) on samples at room temperature of about 20°C and relative humidity of about 50%. The glass element is brought into a bent position and its opposite ends are positioned between two parallel plates (steel plates). Then the distance between the plates is lowered so that the bending radius of the glass element decreases wherein the loading speed is 60mm/min. The distance between the plates is recorded when the ultrathin glass element is kinking or damaging or breaking into two or several pieces which is determined by the signal of the UTM software. From that distance, the corresponding bending radius of the glass element at the time of breakage is calculated. The flexibility is inversely proportional to the distance of the plates. Thus, if the structured part has a flexibility that is two times higher than the flexibility of the unstructured sections, the distance of the plates can be halved before breaking. This two-point bending test is adjusted and is especially suitable for ultrathin glass elements. Due to the flexibility of the elements as described herein, the method can be employed perfectly.

Chemically toughening of glass can improve the flexibility further, for both structured and non-structured parts.

Typically, a molten salt is used for chemical toughening that contains Na⁺- or K⁺-ions or a mixture of these. Commonly used salts are NaNO₃, KNO₃, NaCl, KCl, K₂SO₄, Na₂SO₄, Na₂CO₃, and K₂CO₃. Additives like NaOH, KOH and other sodium or potassium salts may be also used for better controlling the speed of ion-exchange, CS (compressive stress) and DoL (depth of layer) during chemical toughening. Further, an Ag⁺-containing or Cu²⁺-containing salt bath could be used to add anti-microbial function to ultrathin glass. The chemical toughening is not limited to a single step process. It can also include multi steps of immersing the glass disk into salt baths with alkaline metal ions of various concentrations to reach better toughening performance. Thus, the chemically toughened glass article according to the invention can be toughened in one step or in the course of several steps, e.g. two steps.

According to some embodiments, the element can be chemical toughened to reach CS (i.e. a compressive stress at the surface) higher than 100 MPa, preferably higher than 250 MPa, preferably higher than 400 MPa, more preferably higher than 500 MPa, more preferably higher than 600 MPa, or even higher than 700 Mpa, or even higher than 800 Mpa. However, it is preferred to limit the compressive stress so as to maintain a sufficient flexibility. Thus, in a further embodiment the CS is lower than 1500 MPa, preferably lower than 1300 MPa, more preferably lower than 1200 MPa. Further, the element can be chemical toughened to reach a DoL (DoL="depth of layer") higher than 1 µm, preferably higher than 3 µm, more preferable higher than 5 µm, more preferably higher than 7 µm, more preferably higher than 8 µm, more preferably higher than 10 µm, more preferably higher than 12 µm, most preferably higher than 15 µm. However, it is advantageous to limit the DoL with respect to the thickness of the glass element. According to further embodiments, therefore, the DoL is lower than 0.5·t, preferably lower than 0.4·t, most preferable lower than 0.3·t, where t is the glass thickness. The DoL value is the depth into the surface of glass to which compressive stress is introduced. It is defined as the distance from the physical surface to the zero stress point internal to the glass.

The structured and non-structured part are toughened together, so the CS and DoL values are measured based on the non-structured part. The flexibility of the structured and non-structured parts can be improved by chemical toughening. As measured using the 2PB bending test, the bending radius of the test samples can be roughly calculated as bending radius r=d/2.4, where d is the distance between two plates in the 2 point bending test. According to some embodiments of the element, the chemically toughened structured first section can be bent with a bending radius below 500t, preferably below 300t, more preferably below 100t, more preferably below 50t, more preferably below 40t, more preferably below 30t, more preferably below 25t, more preferably below 20t, more preferably below 15t, more preferably below 10t, more preferably below 7.5t, more preferably below 5t, more preferably below 4t, more preferably below 3t, or even below 2t without breakage, where t is the glass thickness.

In the following, the invention is further described with reference to the accompanying drawings.

### Short description of the drawings

Fig. 1 shows an element of a brittle material.
Figs. 2 and 3 show two different designs of first sections.
Fig. 4 shows a testing apparatus to measure the bending force on a flexed element of brittle material.
Figs. 5 to 12 show diagrams of principal stresses and the reaction force of glass elements in dependence of a distance coordinate that corresponds to the amount of deflection of the glass element.
Fig. 13 shows an element with filled openings 90 in a cross sectional view.
Fig. 14 and Fig. 15 show articles with an element as a part of a sandwich structure.
Fig. 16 shows an article with an element with folded second sections.
In the embodiments of Fig. 17 and Fig. 18, the first section 9 encompasses one of the second section 11. Fig. 19 shows a diagram of the force versus the plate distance in a 2-point-bending measurement.
Fig. 20 shows a photograph of the fragments of an element broken along the first section.
Fig. 21 shows an element similar to Fig. 3 together with dimensions of the webs and openings.
Fig. 22 shows an apparatus for producing laser scorings in a plate shaped element.
Fig. 23 shows a sheet with elements 1.

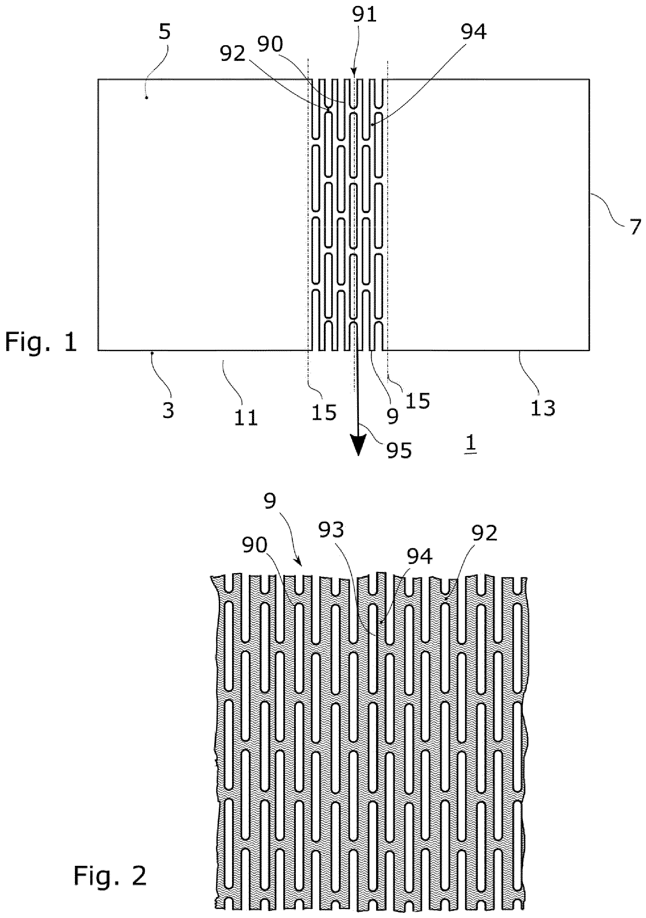

Fig. 1 shows an element 1 made from a brittle material in top view onto one of its sides 3, 5. Preferably, the element 1 is made of glass. The element 1 can be subdivided into three sections, namely a first section 9 with openings 90 and two second sections 11, 13 adjoining the first section 9 so that the first section 9 is located between the second sections 11, 13. The second sections 11, 13 preferably have closed, flat surface and therefore lack of openings 90. In contrast thereto, the openings 90 in the first section 9 form passages or through holes from one side 3 to the opposite side 5.

Without restriction to the specific example as depicted in Fig. 1, the openings 90 are generally arranged in an array of adjacent parallel lines 91. The lines of openings 91 are preferably arranged in parallel. This way, the distance between openings 90 of adjacent lines 91 remains constant. The openings 90 within a line 91 are separated by first webs 92. Further, the openings 90 of adjoining lines 91 are separated by second webs 94. Thus, the first section 9 can generally also be described as a mesh of interconnected first and second webs 92, 94 with openings 90 in between.

Due to the mesh of openings 90 or webs 92, 94, respectively, the first section 9 has a high flexibility so that the element 1 can be easily flexed at the intermediate first section 9. The flexibility is particularly high if elongated openings 90 are introduced into the element 1 to form the intermediate first section 9. In particular, it is advantageous if the longitudinal direction of the openings extends along the longitudinal direction of the lines 91. With the shape of the webs 92, 94 and their respective dimensions, the bending forces can be influenced and decreased. Generally, without restriction to the depicted exemplary embodiment, the arrangement and shape of the webs 92, 94 is designed so that the flexibility of section 1 with a bending axis along the longitudinal direction of the openings 90 is higher than with a bending axis perpendicular to the longitudinal direction of the openings 90. The preferred bending axis 95 in direction along the longitudinal direction of the openings 91 is shown in Fig. 1. As the bending axis extends along the boundary lines 15 between the first and second sections, the first section 9 provides a hinge to fold the second sections 11, 13.

Further, as can be seen from Fig. 1, the first webs 92 of adjacent lines 91 are arranged offset to each other. The first webs also define the suspension points for the second webs 94. Due to the offset arrangement of these suspension points, a bend of the first section 9 is partly absorbed by a torsion of the second webs 94. The very advantageous effect of translating bending stress into torsional stress is that the maximum tensile stress occurring in the brittle material is reduced compared to the tensile stress occuring in a flexed massive plate. Thus, as a general concept, the element of brittle material may also be characterized by a mesh of webs, which are interconnected in a way that a flexing or bending of the element results in a torsion of at least a subset of the webs. Specifically, this subset comprises the multitude of second webs 94. Thus, generally, an element of an inorganic brittle material is provided having two opposed sides 3, 5 and a circumferential edge 7, the element 1 comprising at least three sections, the at least three sections including a first section 9 and two second sections 11, 13, whereby the second sections 11, 13 adjoin the first section 9 so that the first section 9 is arranged between the second sections 11, 13, the first section 9 comprising a mesh of webs 92, 94 which are interconnected to define openings 90 in the brittle material, whereby the interconnection of the webs 92, 94 is designed in a way so that a bend of the first section 9 causes a torsion of at least a subset of webs. In the embodiment as exemplary shown in Fig. 1, the number of second webs 94 which experience a torsional strain is approximately half of the total number of webs 92, 94. According to a preferred embodiment it is generally preferred that the webs, in particular the first and second webs 92, 94 form a mesh, wherein the webs are interconnected so that at least a subset of the webs within the mesh experience a torsional strain upon flexing the first section 9, wherein the subset comprises at least one third of the total number of webs within the mesh.

Besides of a bending of the element, strains may also exerted by a uniaxial pulling force along the element. In this case, the webs absorb the pulling force by bending within a plane parallel to the sides 3, 5. Due to this bending, the accompanying strains may converge at the ends of the openings. As in the embodiment of Fig. 1 it is for this reason generally preferred to provide openings 90 having a rounded contour, in particular, a contour with rounded ends. These ends are in particular located at opposite positions in direction along the lines 91. A rounded contour does not mean that the openings may also have straight-lined segments. In fact, the embodiment of Fig. 1 has straight-lined segments 93 of the contour extending along the longitudinal direction of the oblong openings 90. Rather, a rounded contour means that the contour of the opening 90 lacks of sharp edges.

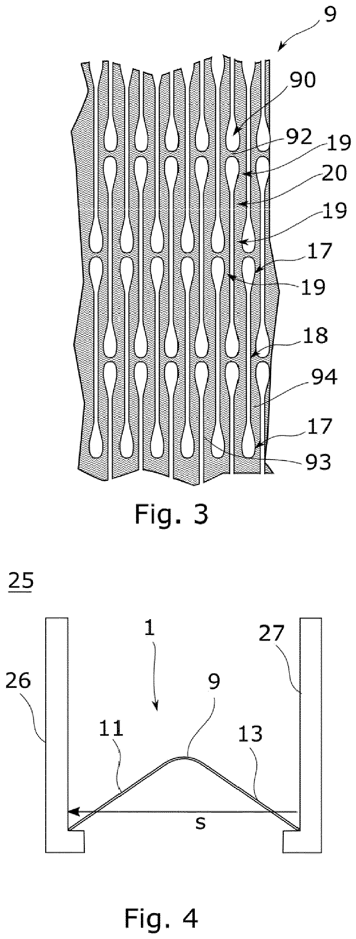

Figs. 2 and 3 show two embodiments of meshes or patterns of openings 90 within the first section 9. The embodiment of Fig. 2 is similar to the one shown in Fig. 1. Accordingly, the openings 90 are elongated and have a rounded contour with straight-lined longitudinal edges. The shape of the openings 90 and webs 92, 94 of the embodiment of Fig. 3, however, is more complex. Generally, without restriction to the specific embodiment as shown, the openings 90 have a varying width along their longitudinal direction. Specifically, the openings 90 have two maxima 17 of the width that are spaced apart in longitudinal direction, with an intermediate minimum 18 of the width located between the two maxima.

Similarly, the second webs 94 have two minima 19 of the width. These minima 19 are spaced apart in longitudinal direction of the webs 94. Further, an intermediate maximum 20 of the width is located between the minima 19 of the width of the second webs 94.

Although the contour of the openings 90 is more complex compared to the example of Fig. 2, in both examples the contour of the openings 90 or the second webs 94 has at least one straight-lined segment 93.

Specifically and according to a further embodiment, the position of the intermediate maximum 20 of the width of the second web 94 is located at the straight-lined segment 93. Similarly, the position of the intermediate minimum 18 of the openings width is located along the straight-lined segment 93. If opposed straight-lined segments 93 are parallel, then these features result in minima and maxima that are extended in lengthwise direction, i.e., along the direction of lines 91. This is advantageous to diffuse and thereby lower the maximum tensional strain that may occur along the contour upon bending the first section 9.

Fig. 4 shows a test apparatus 25 to measure the bending force required to flex an element 1 of brittle material. The test apparatus 25 comprises two jaws 26, 27 which are mounted movably with respect to each other so that the distance between the jaws 26, 27 can be adjusted. An element 1 placed between the jaws 26, 27 will bend as shown upon decreasing the mutual distance of the jaws 26, 27. To evaluate the stiffness and bending behaviour, the bending force exerted by the element 1 is measured as a function of the distance or position coordinate s. For illustration, the distance s is shown in Fig. 4 as an arrow. Fig. 4 also shows that the distant coordinate s corresponds to the amount of deflection of the glass element.

In the following, the course of the bending forces as it may be recorded with an apparatus according to Fig. 4 is discussed for three exemplary designs of glass elements. The bending forces discussed here are not measured but calculated using a finite element modellation.

The samples are glass sheets of size 100 x 20 mm². Design 1 is a comparative example consisting of a massive glass plate. The glass elements according to designs 2 and 3 have cut-outs or openings 90 forming a flexible first section 9. The pattern of the openings 90 of design 2 corresponds to the embodiment of Fig. 2. The width of the webs 92 is 200 µm. Design 3 conforms to the shape of the openings 90 and the mesh of webs 92, 94 as shown in Fig. 3. The width at the minimum 19 of the webs 94 is 50 µm and the length of the openings 90 is 3 mm. For the simulations, it is assumed that the glass has no thickness tolerances, that the glass is stress free and has no chemical preload. Further the glass is assumed to behave elastically. For the calculation it was assumed that the glass element does not break upon flexing.

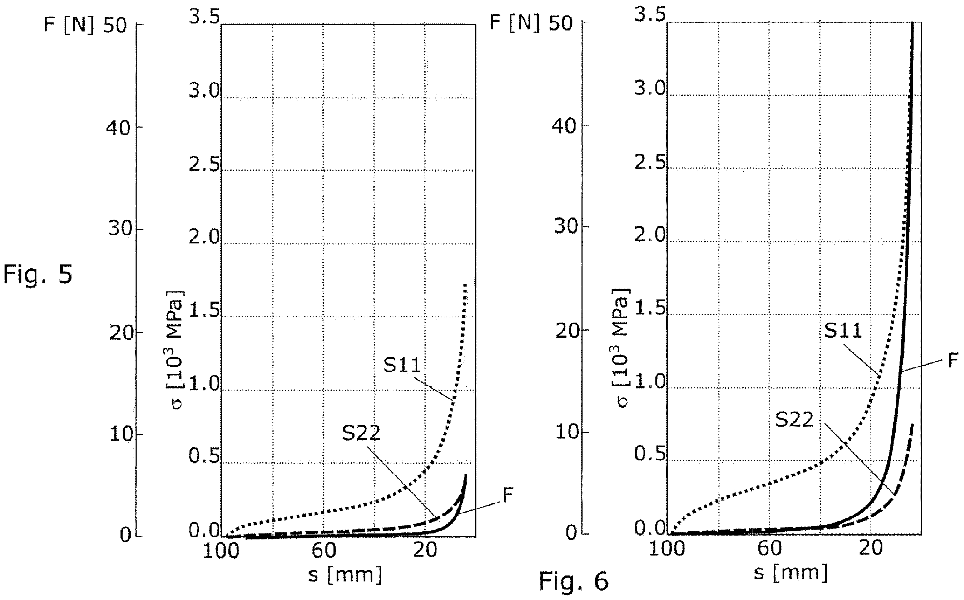

Figs. 5 to 12 show the principal stresses S11, S22 and the reaction force F as a function of the distance s of the jaws 26, 27 for glass elements according to the aforementioned designs 1, 2 and 3.

S22 is the principal stress in direction perpendicular to the bending axis and S11 denotes the principal stress in direction along the bending axis 95, i.e. along the lines 91 of openings 90. Typically, the component S22 is lower than the component S11 as in the direction along the bending axis no geometrical difference in the segment length between the sides 3, 5 occurs. For symmetry reasons, the reaction force is actually twice as large as shown in the diagrams.

Figs. 5 and 6 show the parameters S11, S22, F for glass elements according to design 1 having a thickness of 100 µm and 200 µm, respectively. As it is to be expected, the bending force F and the parameter S11 are both considerably higher for the glass having a thickness of 200 µm (i.e. Fig. 6). For the thicker glass element 1 the principal stress roughly doubles and the reaction force is about 10 times higher.

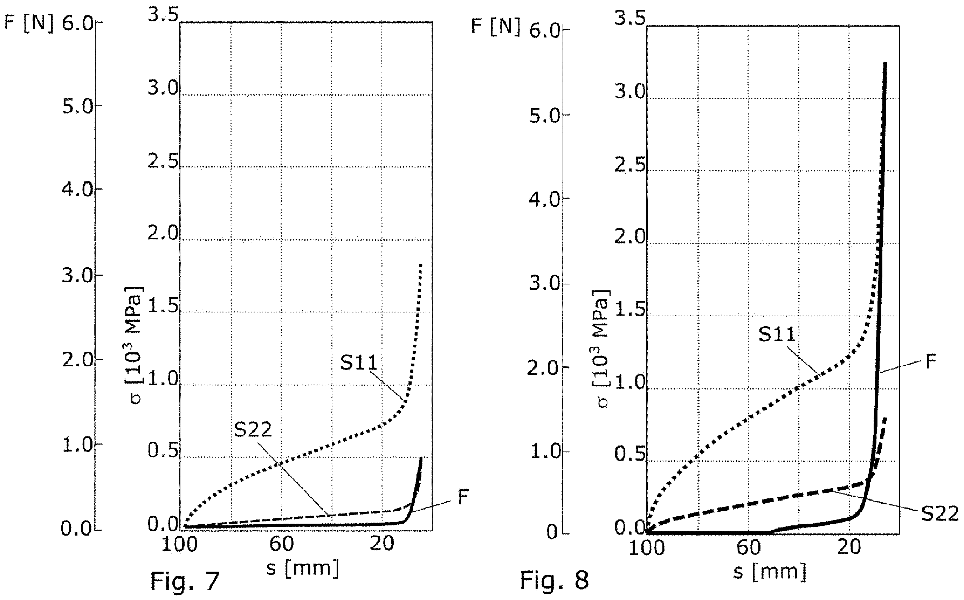

Figs. 7 and 8 are graphs of the parameters S11, S22, F for a glass element 1 according to design 2, i.e. with a pattern of openings 90 as shown in Fig. 2. The element 1 corresponding to the graphs of Fig. 7 has a glass thickness of 100 µm. The elongated openings 90 of the element have a length of 1 mm. The glass element of the example of Fig. 8 has a thickness of 200 µm and openings of 1mm length.

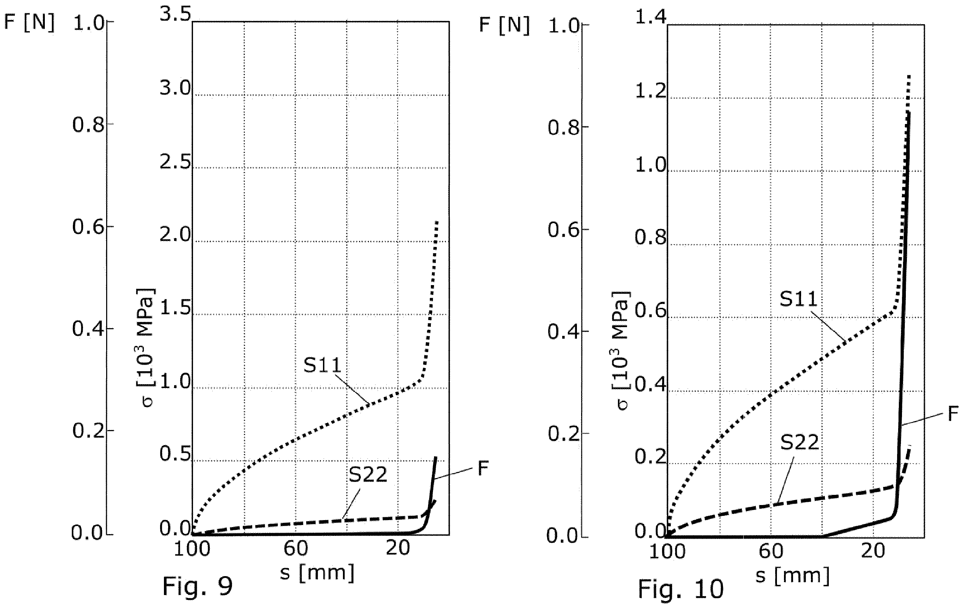

The glass element according to Fig. 9 is similar to the example of Fig. 7. Specifically, the glass has openings 90 shaped according to design 2 and has a thickness of 100 µm. However, the length of the openings is 3mm instead of 1 mm as in Fig. 7. This results in a further reduced reaction force, which is substantially zero for distance values down to 20 mm. Fig. 10 shows the graphs of S11, S22 and F for a glass element with 200 µm thickness and a length of the openings 90 of 3 mm.

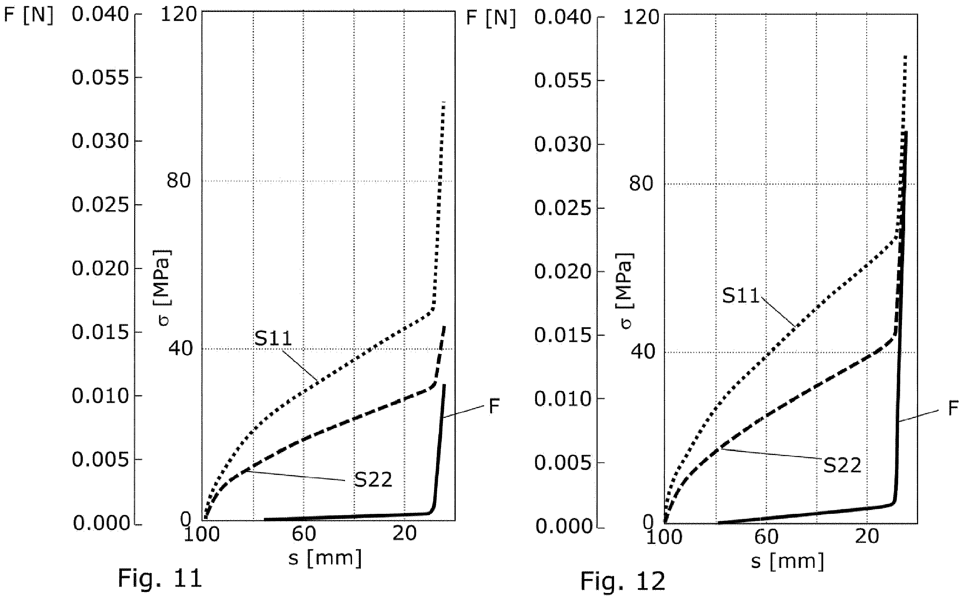

Finally, Fig. 11 and Fig. 12 show the graphs of S11, S22 and F for two glass elements 1 structured according to design 3. Fig. 11 shows the values for a glass thickness of 100 µm and Fig. 12 the values for a glass element having a thickness of 200 µm. As it is evident from a comparison of Figs. 11, 12 with Figs. 7 - 10, the design 3 with the openings 90 having an intermediate minimum width exhibits an even further reduced reaction force.

According to one example, an element made from AS87 glass and having a thickness of 200 µm with Design 2 and 4 mm length of opening 90 was chemically toughened at 390C for 45 min. A DoL of 20 µm and CS of 700 Mpa were achieved. The structured part can be bent to R 3 mm without breakage.

In a further example an AS87 glass element with a thickness of 100 µm and structured according to Design 3 with 3 mm length of openings 90, was chemically toughened at 390 °C for 30 min to get DoL of 15 µm and CS of 650 MPa. The structured part can be bent to R 0.5mm without breakage.

For both designs 2 and 3, the diagrams show an abrupt change in the rise of the reaction force at a distance s of about 10 mm. This happens when the side surface of the glass element contacts the jaws 26, 27 of the apparatus 25 at a positon within the first section 9. From this point onwards, the segment of the first section 9 which spans over the gap between the jaws shortens with decreasing distance.

The following table lists maximum values of the parameters S11, S22 and F and design characteristics of the embodiments of Figs. 5 to 12 together with the values for further examples.

| Glass thickness | Length of opening 90 [mm] | S11, max [MPa] at bending radius 5 mm / 3 mm | S22, max [MPa] at bending radius 5 mm / 3 mm | Bending force per jaw [N] at bending radius 5 mm / 3 mm |
|---|---|---|---|---|
| Design 1 | | | | |
| 100 µm | (no hinge j oint) | 222 / 393 | 992/ 1.735 | 4.4 / 12.4 |
| 200 µm | (no hinge j oint) | 445 / 795 | 1.748 / 3.535 | 35.5 / 102.2 |
| | | | | |

| Design 2 | | | | |
|---|---|---|---|---|
| 100 µm | 1 mm | 180 / 317 | 1.042 / 1.850 | 0.41 / 1.76 |
| 100 µm | 2 mm | 109 / 188 | 659 / 1.212 | 0.12/0.64 |
| 100 µm | 3 mm | 70 / 119 | 474 / 861 | 0.06/0.32 |
| 100 µm | 4 mm | 55 / 103 | 369/675 | 0.02 / 0.16 |
| | | | | |
| 200 µm | 1 mm | 456 / 808 | 1.748 / 3.123 | 2.40/11.2 |
| 200 µm | 2 mm | 266 / 461 | 1.008 / 1.874 | 0.63/3.82 |
| 200 µm | 3 mm | 156 / 252 | 693 / 1.274 | 0.28/1.72 |
| 200 µm | 4 mm | 120 / 207 | 532/976 | 0.14/0.91 |
| | | | | |

| Design 3 | | | | |
|---|---|---|---|---|
| 100 µm | 3 mm | 32 / 52 | 59 / 11 | 0.004/0.02 |
| 200 µm | 3 mm | 70 / 112 | 45 / 84 | 0.012 / 0.06 |

As stated above, the width of the webs 92 for the examples according to design 2 is 200 µm. The thickness of the glass elements as listed above is 100 µm or 200 µm so that the web width does not exceed the thickness. Similarly, the minimum web width for the examples according to design 3 is 50 µm, whereas the plate thickness amounts to 100 µm or 200 µm, respectively. Thus, according to an embodiment which is also realised in the above discussed examples, the minimum width of the second webs 94 is equal to or less than the thickness of the element 1. More generally, it is preferred that the minimum width of the second webs is equal to or less than twice the thickness of the element 1. If the width of the web becomes large compared to the thickness of the glass element 1, the torsion of the second web 94 results in higher tensile stress along the edge of the web and thus reduces the flexibility and increases the probability of failure, i.e. breakage.

Further, coming along with the large cutout length of the openings, the second webs 94 of the above listed examples have a length that is at least twice the thickness of the element 1.

However, although long openings and thin webs are advantageous to achieve a high flexibility the mesh of webs 92, 94 in the first section 9 can still be designed so that the surface is predominantly formed by the brittle material. In other words, according to one embodiment the surface fraction of the brittle material is larger than the surface fraction of the openings 90 within the first section. Inter alia, this facilitates a connection such as a laminate to other elements.

The element 1 is preferably fabricated from glasses which can be easily structured to introduce the openings 90 and which maintain sufficient stability after the structuring.

According to a first embodiment of the composition the glass of the element comprises the following components in weight-%:

| | |
|---|---|
| SiO₂ | 30 to 85 |
| B₂O₃ | 3 to 20 |
| Al₂O₃ | 0 to 15 |
| Na₂O | 3 to 15 |
| K₂O | 3 to 15 |
| ZnO | 0 to 12 |
| TiO₂ | 0,5 to 10 |
| CaO | 0 to 0,1 |

According to a second embodiment of the composition the glass of the element comprises the following components in weight-%:

| | |
|---|---|
| SiO₂ | 55 to 75 |
| Na₂O | 0 to 15 |
| K₂O | 2 to 14 |
| Al₂O₃ | 0 to 15 |
| MgO | 0 to 4 |
| CaO | 3 to 12 |
| BaO | 0 to 15 |
| ZnO | 0 to 5 |
| TiO₂ | 0 to 2 |

According to a third embodiment of the composition, the glass of the element is essentially free from alkali oxides. The glass comprises the following components in weight-%:

| | |
|---|---|
| SiO₂ | 58 to 65 |
| B₂O₃ | 6 to 10,5 |
| Al₂O₃ | 14 to 25 |
| MgO | 0 to 3 |
| CaO | 0 to 9 |
| BaO | 3 to 8 |
| ZnO | 0 to 2. |

Preferably, in the composition of this glass the sum of the contents of MgO, CaO and BaO is within a range from 8 to 18 weight-%.

In a fourth embodiment the glass composition comprises the following components in weight-%:

| | |
|---|---|
| SiO₂ | 50 to 65 |
| Al₂O₃ | 15 to 20 |
| B₂O₃ | 0 to 6 |
| Li₂O | 0 to 6 |
| Na₂O | 8 to 16 |
| K₂O | 0 to 5 |
| MgO | 0 to 5 |
| CaO | 0 to 7, preferably 0 to 1 |
| ZnO | 0 to 4, preferably 0 to 1 |
| ZrO₂ | 0 to 4 |
| TiO₂ | 0 to 1, preferably essentially no TiO₂ |

Further, the glass may contain 0 to 1 weight-%: P₂O₅, SrO, BaO; fining agents in an amount of 0 to 1 weight.-%, preferably SnO₂, CeO₂ or As₂O₃.

According to one embodiment the element 1 is chemically toughened to increase the mechanical strength. Chemical toughening involves an ion exchange within the glass as the brittle material, wherein ions of the glass are exchanged by larger ions in a region of the glass adjacent to the surface so that the larger ions impart a compressive stress to the glass. Usually, alkali ions are exchanged to effect the toughening. Thus, the above listed glasses are suitable for chemical toughening as far as they contain a sufficient amount of alkali ions. Further, it is also possible to temper the glass to provide a compressive stress zone at the surface. Tempering or thermally toughening involves heating the glass until it softens and then rapidly cooling the glass element so that the surface contracts stronger than the glass in the bulk of the element. Thermal toughening is particular effective for thicker glass elements. It is preferred that the compressive stress zone effected by the toughening has a depth that is less than half of the minimum web width of the first and second webs 92, 94. If the compressive zone is deeper than half of the web width, the compressive stress zones which extend from the edges of the webs into the glass would combine in the center of the respective web, thereby reducing the toughening effect. In the case of chemical toughening, the compressive stress zone is essentially defined by the ion exchange depth. Thus, it is preferred that the ion exchange depth (also referred to as DoL="depth of layer") is less than half of the web width.

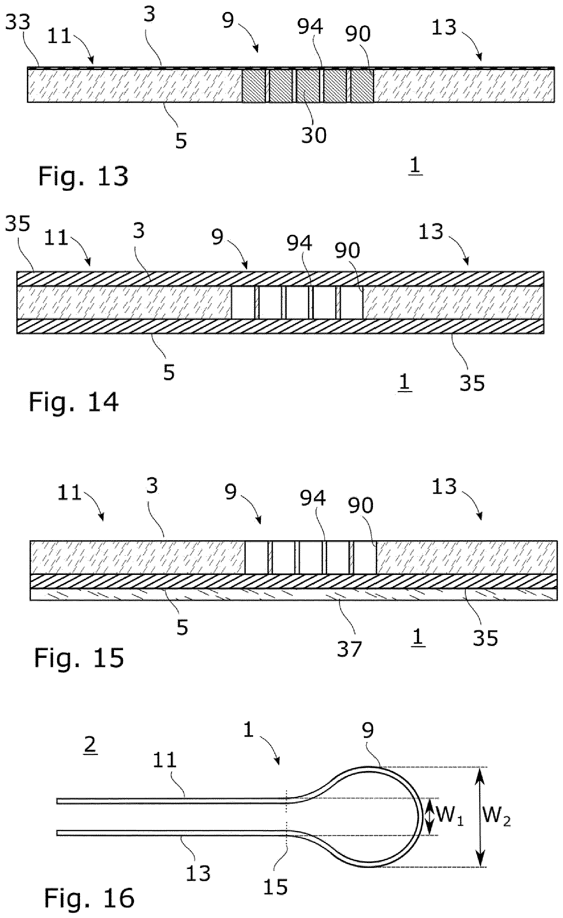

For some applications, a closed surface of the element 1 would be desirable. For this purpose, the openings 90 may be filled with organic materials, i.e. plastics, rubbers, or adhesives. Fig. 13 shows an example with openings 90 filled with plastic 30 in a cross sectional view. Depending on the application, it may also be useful to leave some of the openings 90 open. Thus, generally and without restriction to the specific example as depicted, an element 1 is provided wherein at least a subset or a part of the number of openings 90 is filled with plastic 30. Preferably and as shown, the openings 90 are closed by the fillings. However, it would also be possible to provide fillings with one or more openings, e.g. openings that form thin channels.

According to a refinement of the embodiment with the plastics filled openings 90 it is contemplated that the plastic is chosen and adapted so that the reaction force due to a deflection of the element is changed by at most 30%, preferably at most 20%, in particular at most 10%, especially preferred by at most 1%. This change is measured relative to a configuration with open openings 90, i.e. without plastic present in the openings 90. In practice, this feature can be easily verified by measuring the reaction force of the element 1 upon deflection with the openings 90 filled and then removing the plastic 30 and repeat the measurement. Generally, without restriction to the above conditions of the reaction force, the plastics may be or at least contain an elastomer. This keeps the plastics filling sufficiently flexible to avoid a large increase in stiffness.

According to a further refinement, the plastic 30 is transparent. In particular, the plastic 30 may have a refractive index matching the refractive index of the brittle material of the element 1. Achieving a perfect match may be not necessary. Rather, within this disclosure a match of the refractive indexes of plastic 30 and brittle material is understood as a refractive index difference of less than 0.3, preferably less than 0.2, more preferably less than 0.15, more preferably less than 0.1, more preferably less than 0.05, more preferably less than 0.02, or less than 0.01, or less than 0.005, or even less than 0.002.

A suitable plastic may contain silicone as a polymer. Silicone is particularly suited to bound to a silicon containing anorganic brittle material such as most of the suitable glasses. As well, silicone can be both an elastomer and a transparent plastics.

In a further embodiment, within the first section 9, the surface of the element 1 is partly formed by the plastic 30. Depending on the application, this may not be favorable for the application of the element 1. For example, compared to the inorganic brittle material of the element 1, the plastic 30 may provide less adherence for components or layers which are to be applied to one of the sides 3, 5. For this purpose, an optional inorganic layer may be deposited onto at least one of the sides 3, 5. According to one embodiment, silicon oxide is deposited as the inorganic layer. For example, the layer 33 may be deposited by chemical vapor deposition (CVD) or by flame pyrolysis. If the layer 33 spans over both the brittle material and the plastic 33, uniform surface properties are achieved despite the different materials of the element 1.

The element 1 as described herein can be used as a part for a great variety of articles. An article comprising a flat element 1 as described herein may for example be a flexible, in particular foldable display. Typically, due to the high flexibility of the element 1 imparted by the structuring of the first section, an article comprising the element 1 has at least two sections or parts movable with respect to each other.

According to one embodiment, an article 2 comprising an element 1 of brittle material comprises a sandwich structure wherein the element 1 forms one layer of the sandwich structure. Examples of articles 2 wherein the element 1 forms one layer of a sandwich structure are shown in Figs. 14 and 15.

Generally, the sandwich structure may comprise a laminate. In a preferred embodiment, the laminate may comprise organic layers 35, in particular polymer or plastic layers laminated to one side of the element 1. An organic layer may also comprise or consist of a silicone. As well and as shown in Fig. 14, organic layers 35, in particular plastic or polymer layers 35 may be laminated to both sides 3, 5 of the element 1. Thus, with at least one side 3, 5 of the element 1 being laminated to an organic layer such as a polymer layer 35, a sandwich structure is obtained that combines a high hardness of the brittle material such as glass with a high flexibility. The polymer layer 35 can be laminated to element 1 by adhesives, i.e. optical clear adhesive, thus forming a further organic layer, or be coated to the surface of element 1 without glue. The coating of a protective layer such as chemical vapor deposition method (CVD), dip-coating, spin-coating, ink-jet, casting, screen printing, painting and spaying. However, the invention is not limited to those procedures. Suitable materials are also known in the art. For example they can comprise a duroplastic reaction resin that is a polymer selected from the group consisting of phenoplasts, phenol formaldehyde resins, aminoplasts, urea formaldehyde resins, melamine formaldehyde resins, epoxide resins, unsaturated polyester resins, vinyl ester resins, phenacrylate resins, diallyl phthalate resins, silicone resins, cross-linking polyurethane resins, polymethacrylate reaction resins, and polyacrylate reaction resins.

In the case of lamimation, the polymer material can be selected for example from the group consisting of a silicone polymer, a sol-gel polymer, polycarbonate (PC), polyethersulphone, polyacrylate, polyimide (PI), an inorganic silica/polymer hybrid, a cycloolefin copolymer, a polyolefin, a silicone resin, polyethylene (PE), polypropylene, polypropylenepolyvinyl chloride, polystyrene, styrene-acrylonitrile copolymer, polymethyl methacrylate (PMMA), ethylene-vinyl acetate copolymer, polyethylene terephthalate (PET), polybutylene terephthalate, polyamide (PA), polyacetal, polyphenyleneoxide, polyphenylenesulfide, fluorinated polymer, a chlorinated polymer, ethylene-tetrafluoroethylene (ETFE), polytetrafluoroethylene (PTFE), polyvinyl chloride (PVC), polyvinylidene chloride (PVDC), polyvinylidene fluoride (PVDF), polyethylene naphthalate (PEN), a terpolymer made of tetrafluroethylene, a terpolymer made of hexafluoropropylene, and a terpolymer made of vinylidene fluoride (THV) or polyurethane, or mixtures thereof. The polymer layer can be applied onto element 1 by any known method.

The example of Fig. 15 is based on an embodiment of the article 2 wherein a glass sheet 37 is laminated to the element 1. In particular, the glass sheet 37 may be laminated to the element 1 by an intermediate organic layer 35, preferably a plastic layer. The glass sheet 37 may be a thin glass whose thickness does not exceed that of element 1. The thickness of the glass sheet 37 is preferably less than 220 µm, preferably less than 160 µm. The glass sheet 37 may form a substrate for the light emitting or light transmitting structures of a display which can be folded at the flexible first section 9. The glass sheet 37 may also be chemically toughened.

In the examples of Fig. 14 and 15, the openings 90 are not filled as in the example of Fig. 13. However, these examples may as well combined.

If the lines 91 of openings 90 are parallel and rectilinear as in the example of Fig. 1, the first section 9 can provide a hinge for the adjacent second sections 11, 13. The hinge may be so flexible that the element can be folded together so that the second sections 11, 13 are facing each other. Moreover, as shown in Fig. 16, a very compact arrangement of the article 2 may be achieved, if the second sections 11, 13 which face each other are positioned so close together that the first section 9 bulges outward so that the thickness W₂ of the folded element 1 is larger at the first section 9 than at the boundary lines 12 between the first section 9 and the second sections 11, 13. As shown, the thickness W₁ of the folded element 1 at the position of the opposed boundary lines 15 is smaller than the thickness W₂ of the outwardly bulged first section 9. A reduced thickness may be also present at an arbitrary position where the second sections 11, 13 are opposed. As it is evident from Fig. 16, the element 1 is folded similarly to a booklet.

Due to the folding and bulging outwards of the first section 9, generally, two concavely bent portions 40 of the first section 9 are formed with an intermediate convexely shaped portion. The concavely bent portions 40 adjoin the boundary lines 15 between the first and second sections 9, 11, 12.

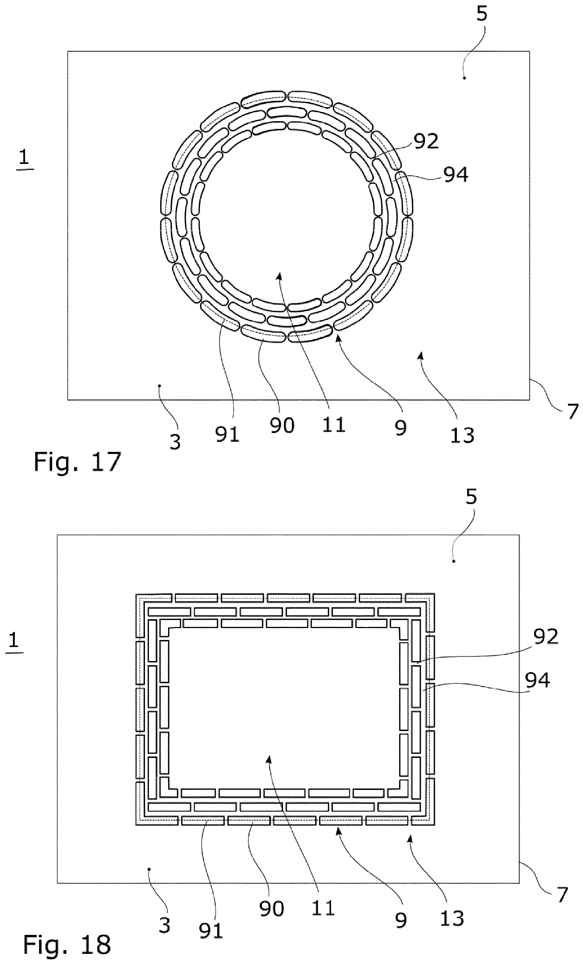

In the hitherto described embodiments the flexible first section 9 formed a continuous stripe between the second sections 11, 13 so as to provide a hinge joint between the second sections 11, 13. In another embodiment, the first section 9 is arranged between the second sections 11, 13 as well. However, according to this embodiment the first section 9 encompasses one of the second sections. An example of this embodiment is shown in Fig. 17. The other second section 13 encompasses the first section. According to a refinement, the first section 9 is closed-ring shaped as it is also the case in the depicted example. Preferably, the lines 91 of openings 90 are then concentric closed lines. Fig. 17 also represents an example where the lines 91 of openings 90 are not strait-lined. Rather, the lines 91 are closed and circular. Fig. 18 shows a further embodiment with a first section that is ring shaped and which encompasses a second section 11. In difference to Fig. 17, however, the inner second section 11 is rectangular. As well, the first section has the shape of a rectangular frame. Further, the lines 91 of openings 90 are straight-lined in sections.

In the embodiments with a first, flexible section encompassing a second section, the first section 9 can be effective as a spring. The inner second section can be deflected in a direction perpendicular to the sides 3, 5 with the first section being stretched. The reaction force of the first section then effects a force to the inner second section 11 which drives the inner second section 11 back to a position in plane with the outer second section 13. This configuration can, e.g., be used to provide push switches. Thus, according to a further embodiment, an article 2 is provided having a push switch wherein the push button of the push switch is formed by one of the second sections 11, 13.

The examples of Figs. 17 and 18 are merely illustrative and of course many other configurations of first and second sections 9, 11, 13 are possible.

According to a further aspect of this disclosure, the element 1 of brittle material can be structured in a very advantageous manner with respect to its breakage behaviour. If a sheet of brittle material is bent until it breaks, in general a multitude of fragments is obtained. However, with a suitably structured first section 9, the breakage can be controlled so that only two large fragments are generated. There may eventually be further sherds of the brittle material but if this is the case, there size is very small compared to the two major fragments. Thus, according to an embodiment, the first section of the element is structured so that bending of the first section 9 about a bending axis until breakage breaks the element into two fragments. As there are no other larger fragments, typically, the combined weight of the two fragments amount to at least 95% of the weight of the original element. This breakage behaviour is advantageous, as a multitude of smaller shards increase the risk of injury. This is in particular true for brittle materials such as glass, which in general break into sharp edged fragments.

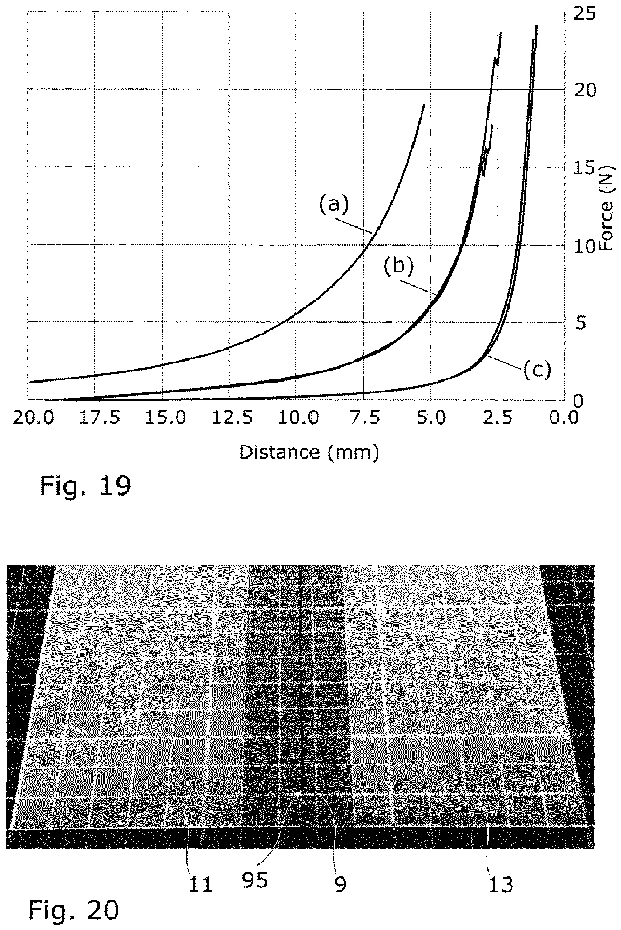

Fig. 19 shows a diagram of the force versus the plate distance s in a 2-point-bending test with the measurement device as shown in Fig. 4. The tested structured glass elements had a thickness of 300 µm. The elements were structured like the embodiment of Fig. 2, i.e. with elongated openings 90 having straight edge segments 93. Three samples with a pitch width of 200 µm (set of curves (c)) and three further samples with a pitch width of 300 µm (set of curves (b)) were examined. For comparison, a further bending measurement test of an unstructured, continuous glass sheet having a thickness of 70 µm is shown (curve (a)). All glass elements are fabricated from glass of type AS87.

The pitch width is the width of the second webs 94 which is constant along the straight lined segments. The samples were bent until breakage. The curves shown in Fig. 19 demonstrate the highly increased flexibility of glass elements as described herein compared to an unstructured glass sheet. Further, the flexibility of the samples with 200 µm pitch is much higher than that of the samples with 300 µm pitch. All the samples were toughened at the same toughening condition to reach CS of ~ 700 MPa and DoL of ∼20 µm. The plate distances at which breakage of the structured samples occurred are listed in the following table:

| 200 µm pitch | 300 µm pitch |
|---|---|
| 1.20 | 2.44 |
| 0.94 | 2.94 |
| 1.10 | 2.74 |

The fracture typically occurs in direction along the lines 91 of openings 90 and in the middle of the first webs 92.

It is further evident from Fig. 19 that a suitable structuring with openings 90 in the first section reduces the force required to bent the element 1 considerably compared to an unstructured glass sheet. Even in the example of Fig. 19, the structured elements show a bending force (curves (b) and (c)) that is reduced by more than 50% compared to the unstructured element (curve (a)) although the unstructured element is thinner. Thus, according to one embodiment, the first section 9 is structured so that the stresses at the surfaces generated by bending (the stresses are proportional to the force required for bending) are reduced by at least 50% compared to an unstructured element of the same thickness. This feature can be verified in several ways. One possibility is to compare the stresses using a finite element analysis with models of the structured and the unstructured element. Another possibility is to compare the bending forces at the element with bending at the structured, first section and bending at one of the unstructured second section. Further, a multitude of samples with and without a structured first section 9 may be tested with a two-point-bending method as described with respect to Fig. 4 until the samples break. The bending stresses or at least their relation then can be derived from the respective Weibull distributions, or Weibull parameters, respectively.

In a further embodiment, the element 1 or the first section 9, respectively, are structured so that the stresses at the surface of the first section are nearly independent of the thickness of the element 1. This is in particular the case if the structures are scaled with the thickness of the element 1. I.e., the stresses will not alter significantly if the thickness of the element is doubled together with the dimensions of the structuring, i.e. the dimensions of the openings 90 and of the webs 92, 94. Specifically, an element 1 is provided which has a first section 9 structured so that the stress at the surface of the first section due to bending changes by at most 10% within a thickness range of the element from 200 µm to 2 mm. Again, this feature may be verified by a finite element analysis or by performing a 2-point bending test for samples of different thickness until breakage and comparing the Weibull parameters.

Fig. 20 shows a photograph of a sample broken along the structured, first section 9. The element 1 is placed on a substrate with a printed mesh visible as bright lines. The sample shown has a pitch, i.e. width of the second webs 94 of 200 µm. As can be seen, a single fracture 9 extends straight along the first section 9, separating the element 1 into only two large fragments.

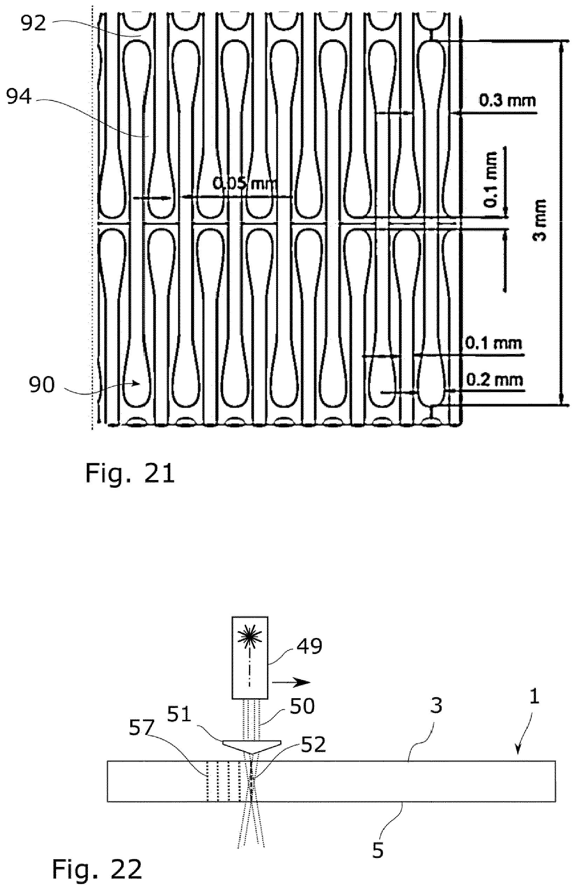

In the following, the influence of the various dimensions of the openings 90 and webs 92, 94 to the principal stresses S11, S22 is further detailed. For this purpose, the features of a basic design and some variations thereof have been investigated using finite element analysis. Fig. 21 shows the first section 9 of the basic design with the respective dimensions. Thus, the first webs 92 have a length of 0.1 mm, the second webs 94 have a minimum width of 0.05 mm. The openings 90 have a length of 3 mm and a width varying between 0.1 mm and 0.2 mm. The thickness of the reference element 1 is 100 µm.

In a first analysis, different lengths of the first webs 92 are investigated. The lenghts are 50 µm, 100 µm (reference), 200 µm, 300 µm. The finite element analysis reveals that the S11 component of the strain for a bending radius remains nearly constant at 50 MPa. However, the S22 component decreases significantly with increasing length of first webs 92. Specifically, the S22 drops from 180 MPa for 50 µm web length to ca. 50 MPa for 300 µm web length for a bending radius of 3 mm. Thus, according to one embodiment, the length of the first webs 92 is at least as large as the element thickness, preferably at least twice as large to lower the overall bending stress.

In a second analysis, different lengths of the openings 90 are investigated. Specifically, openings with lengths of 2 mm and 3 mm were compared. The analysis reveals that the length of the openings 90 does not have a strong influence on the principal strains. The maximum principal strains S11ₘₐₓ, S22ₘₐₓ are listed in the table below:

| Length of opening 90 | 2 mm | 3 mm |
|---|---|---|
| S11ₘₐₓ | 67 MPa | 49 MPa |
| S22ₘₐₓ | 122 MPa | 104 MPa |

The strain values are slightly better for the embodiment with 3 mm length. Thus, according to a further embodiment, the openings 90 preferably have a length being at least 25 times larger than the thickness of the element. However, if the length is too large, the stability against a pressure onto one of the side faces decreases. Therefore, it is preferred to limit the length of the openings to at most 100 times the element thickness.

In a third analysis, the minimum width of the second webs 94 is varied. Specifically, in addition to the reference model with a minimum width of 50 µm, further widths of 25 µm, 35 µm and 70 µm were investigated.

The maximum values of the principal strains for a bending radius of 3 mm are listed in the table below:

| Minimum width of webs 94 | 70 µm | 50 µm | 35 µm | 25 µm |
|---|---|---|---|---|
| S11ₘₐₓ | 50 MPa | 50 MPa | 50 MPa | 21 MPa |
| S22ₘₐₓ | 200 MPa | 100 MPa | 60 MPa | 9 Mpa |

Thus, while a reduction of the minimum web width has a minor influence on the S11 component, the S22 component considerably decreases. However, on the other hand, a small web width results in a very delicate structure susceptibly to breakage. Therefore, according to a further embodiment, the minimum width of the second webs 92 preferably is smaller than the thickness of the element 1 and more preferably lies within the range from 0,3 times to 0,6 times the thickness of the element 1.

In a forth analysis, the thickness of the element 1 is varied. Specifically, besides of the reference value of 100 µm, elements with a thickness of 200 µm and 300 µm were analysed.

The maximum values of the S11 component varies from 50 MPa to 150 MPa. This variation is proportional to the thickness of the element 1 with a factor of 3. The S22 component shows a smaller variance ranging from 80 MPa to 100 MPa.A further model with a minimum width of the second webs 94 of 35 µm was analysed. The maximum values of the S11 are similar, ranging from 51 MPa to 146 MPa. The S11 component varies between 60 MPa to 76 MPa. The element 1 as described herein can be produced with a method as described in DE 10 2018 100 299 A1 or PCT application PCT/CN2019/086830. A process is employed wherein a laser pre-scores the openings 90 in the element. The pre-scored element is then etched to produce the openings

Specifically, a method with the following steps can be emloyed:
- providing a plate shaped element 1 of a brittle material,
   - directing and focusing the laser beam of a ultrashort pulsed laser onto the element 1, the laser beam 50 having a wavelength at which the brittle material of the element 1 is transparent so that the laser beam 50 can penetrate into the element 1,
   - the laser beam being focused to produce an elongated focus 52 within the element, the intensity of the laser beam 50 being sufficient to produce a filament shaped damage zone 57 within the element 1 along the focus 52,
   - the laser beam 50 being moved relative to the element to insert a plurality of filament shaped damage zones 57 side by side along a multitude of ring shaped, or closed paths,
   - etching by exposing the element to an etchant, the etchant intruding into the filament shaped damage zones 57 so that the filament shaped damage zones 57 are widened to form channels which combine due to the widening, so that the part of the element encompassed by the ring shaped paths detaches and openings 90 is produced so that least three sections are formed including a first section 9 and two second sections 11, 13, the second sections adjoining the first section so that the first section 9 is arranged between the second sections 11, 13, the first section 9 comprising the openings 90 so that the first section 9 has a higher flexibility than the second sections 11, 13.

According to a refinemenent, after etching, chemical toughening the element 1 may be performed.

Fig. 22 shows an apparatus for producing laser scorings in a plate shaped element 1 as described above. As shown in Fig. 22, a laser beam 50 of an ultrashort pulsed laser 49 is directed and focused onto the element 1 which is preferably made of glass. The laser beam 50 has a wavelength at which the material of the element 1 is transparent. Accordingly, the laser beam 50 can traverse element 1. By means of a lens 51, the laser beam 50 is focused to produce an elongated focus 52 within the element 1. A suitable lens is a so called axicon lens. This lens basically has a conically shaped refractive surfaces so that parallel light rays are refracted to directions with invariant polar angle. However, other focusing means which produce an elongated focus may be used alternatively or in addition.

The laser beam 50 is sufficiently intense to produce a damage zone within the brittle material. In particular, the damage zone may be generated due to optical breakdown and/or plasma formation within the material. Ideally, the damage zone 57 extends from one side 3 across the element up to the opposite side 5.

The laser beam 50 is moved relative to the element 1 to produce a sequence of damage zones 57. The movement follows a ring shaped path as also shown in Fig. 1 so that the plurality damage zones 57 encircle an area of the element 1 that forms the outline of one of the openings 90 to be produced. Then, the element 1 is exposed to an etchant. This not only etches the disk surface. In particular, the etchant, preferably an aqueous etching solution can penetrate into the damage zones 57 so that the brittle material is etched along these zones. Accordingly, the damage zones 57 are widened by the etching to form channels across the element 1.

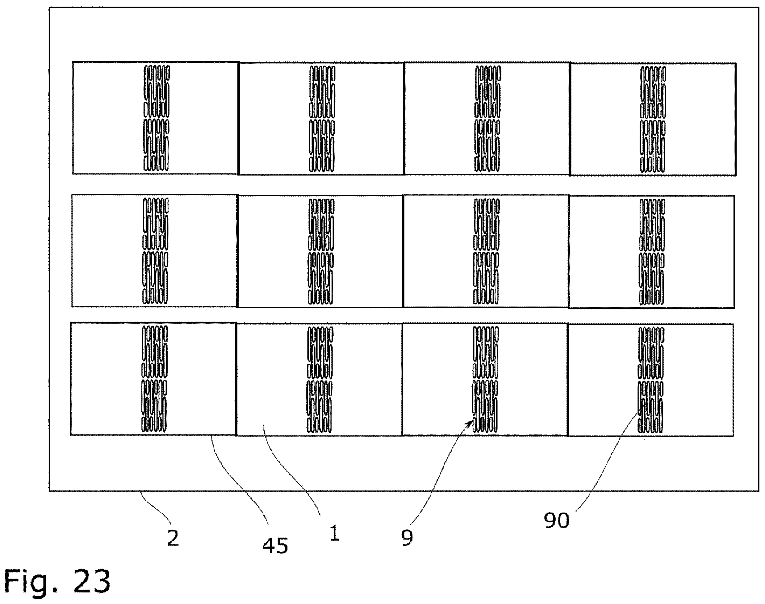

According to a further embodiment, a sheet 2 of brittle material is provided wherein a multitude of elements 1 are produced with the method as defined above and wherein the outline of the elements 1 is produced in the sheet 2 in the same manner by laser scoring and etching. An example of this embodiment is shown in Fig. 23.

This way, by etching the sheet 2, both the elements 1 detach from the larger sheet 2 and the inside parts of the openings 90 detach from the elements. In another embodiment, at least some damage zones 57 of the outlines 45 of the elements 1 have a pitch so that after etching the elements 1 remain connected to the sheet 2 with webs bridging the ring shaped opening along the outline 45 of the elements 1.

In an example, a sheet 2 made of AS87 eco glass with dimensions 520^{∗}380mm and a thickness of 200 µm was processed to obtain elements 1 with openings 90 having 4 mm length. The design is similar to the embodiment shown in Fig. 2 with openings having straight lined segments. The glass sheet 2 was pre-scored with the laser to form elements 1 of rectangular size of 120mm^{∗}80 mm, having rounded corners with a corner radius of 0.1 mm. The as-pre-scored structured glass mother sheet 2 was etched with a 5% solution of NH₄HF₂ for 5 min and then chemically toughened at 390 °C for 45 min to obtain a DoL of 20 µm and a CS of 700 MPa. After toughening, the 120^{∗}80^{∗}0.2mm AS87 elements 1 can be hand break off from the mother sheet 2. A post etching by 5% NH₄HF₂ for 5 min was performed. The so obtained element 1 can be bent to a bending radius of 3 mm without breakage.

In another embodiment LAS glass of a higher thickness (0.55 mm - 0.7 mm) was used. Elements of a 550 µm LAS80 glass with a design as shown in Fig. 3 and 3mm length of openings 90 were chemically toughened in 50 wt.% KNO₃+50 wt.% NaNO₃ salt bath at the temperature of 395 °C for 3h, and then toughened in a 92 wt.% KNO₃+8 wt.% NaNO₃ salt bath at a temperature of 380 °C for 3h. A CS and DoL the 550µm LAS80 elemens 1 was measured with SLP 1000 and FSM600 for Na⁺ and K⁺, respectively. CS and DoL for K⁺ were 630MPa and 3.8µm. CS of Na⁺ at the location of DoLµm is 85µm, and the DoL of Na+ was 98µm.The structured part can be bent to R 3 mm without breakage.

**List of reference signs**

| | |
|---|---|
| 1 | Plate shaped element |
| 3, 5 | Sides of 1 |
| 7 | Edge of 1 |
| 9 | First section of 1 |
| 11, 13 | Second section of 1 |
| 15 | Boundary line between 9 and 11, 9 and 13 |
| 17 | maximum of the width of opening 90 |
| 18 | Intermediate minimum of the width of opening 90 |
| 19 | Minimum of the width of web 94 |
| 20 | Intermediate maximum of the width of web 94 |
| 25 | Test apparatus |
| 26, 27 | Jaw |
| 30 | Plastic |
| 33 | Inorganic layer |
| 35 | Organic layer |
| 37 | Glass sheet |
| 40 | Concave portion |
| 42 | Convex portion |
| 45 | Outline of element 1 |
| 49 | Laser |
| 50 | Laser beam |
| 51 | Lens |
| 52 | Focus of laser beam 50 |
| 57 | Damage zone |
| 90 | Opening in 9 |
| 91 | Line of openings 90 |
| 92, 94 | Web |
| 95 | Bending axis |
| 93 | Straight-lined segment |
| 95 | Fracture |

## Claims

1. An element (1) of an anorganic brittle material having two opposed sides (3, 5) and a circumferential edge (7), the element (1) comprising at least three sections, the at least three sections including a first section (9) and two second sections (11, 13), the second sections adjoining the first section so that the first section (9) is arranged between the second sections (1, 13), the first section (9) comprising an arrangement of openings (90) forming passages from one side (3) to the opposed side (5) of the element so that the first section (9) has a higher flexibility than the second sections (11, 13).

2. The element (1) according to claim 1, wherein the openings (90) are arranged side by side in lines (91) with adjacent openings (90) within one line being separated by first webs (92) and the openings (90) of adjacent lines (91) being separated by second webs (94), and wherein the first webs (92) of adjacent lines (91) are arranged offset to each other.

3. The element (1) according to claim 1 or claim 2, wherein the flexibility of the first section (9) is at least 2 times, preferably at least 3 times, most preferably at least 4 times higher compared to the second sections (11, 13).

4. The element (1) according to one of the preceding claims, with at least one of the following features:
- the lines (91) of openings (90) are rectilinear
- the first section (9) forms a hinge for the second sections (11, 13),
- the webs (92) have a width that is smaller than the width of the openings (90) in longitudinal direction of the lines (91) of openings (90)
- the openings (90) are oblong, with the longitudinal direction of the openings (90) being oriented in direction along a boundary line (15) between the first section (9) and a second section (13).

5. The element (1) according to claim 1, wherein the first section (9) encompasses one of the second sections (11) and the other second section (13) encompasses the first section (9).

6. The element (1) according to one of the preceding claims, **characterized in that** the first and second webs (92, 94) form a mesh, wherein the webs (92, 94) are interconnected so that at least a subset of the webs within the mesh experience a torsional strain upon flexing the first section (9), wherein the subset comprises at least one third of the total number of webs (92, 94) within the mesh.

7. The element (1) according to one of the preceding claims, **characterized by** at least one of the following features:
- the element (1) comprises glass as brittle material,
- the first section (9) of the element (9) is structured so that bending of the first section (9) about a bending axis until breakage breaks the element (1) into two fragments, with the combined weight of the two fragments being at least 95% of the weight of the element (1).

8. The element according to the preceding claim, **characterized in that** the glass composition of the element (1) comprises components in weight-% according to one of the following embodiments:
- first embodiment:
| | |
|---|---|
| SiO₂ | 30 to 85, |
| B₂O₃ | 3 to 20, |
| Al₂O₃ | 0 to 15, |
| Na₂O | 3 to 15, |
| K₂O | 3 to 15 |
| ZnO | 0 to 12, |
| TiO₂ | 0,5 to 10, |
| CaO | 0 to 0,1, |
- second embodiment:
| | |
|---|---|
| SiO₂ | 55 to 75, |
| Na₂O | 0 to 15, |
| K₂O | 2 to 14, |
| Al₂O₃ | 0 to 15, |
| MgO | 0 to 4, |
| CaO | 3 to 12, |
| BaO | 0 to 15, |
| ZnO | 0 to 5, |
| TiO₂ | 0 to 2 |
- third embodiment:
| | |
|---|---|
| SiO₂ | 58 to 65, |
| B₂O₃ | 6 to 10,5, |
| Al₂O₃ | 14 to 25, |
| MgO | 0 to 3, |
| CaO | 0 to 9, |
| BaO | 3 to 8, |
| ZnO | 0 to 2, wherein according to the third embodiment the glass is preferably essentially free from alkali oxides, |
- fourth embodiment:
| | |
|---|---|
| SiO₂ | 50 to 65, |
| Al₂O₃ | 15 to 20, |
| B₂O₃ | 0 to 6, |
| Li₂O | 0 to 6, |
| Na₂O | 8 to 17, |
| K₂O | 0 to 5, |
| MgO | 0 to 5, |
| CaO | 0 to 7, preferably 0 to 1, |
| ZnO | 0 to 4, preferably 0 to 1, |
| ZrO₂ | 0 to 4, |
| TiO₂ | 0 to 1, preferably essentially no TiO₂ |

9. The element (1) according to one of the preceding claims, wherein the openings (90) are elongated, and wherein the element (1) is **characterized by** at least one of the following features:
- the openings (90) have a varying width along their longitudinal direction, wherein the openings (90) have two maxima (17) of the width that are spaced apart in longitudinal direction, with an intermediate minimum (18) of the width located between the two maxima,
- the second webs (94) have two minima (19) of the width, the minima (19) being spaced apart in longitudinal direction of the web (94), wherein an intermediate maximum (20) of the width is located between the minima (19) of the width of the second web (94)
- the contour of the openings (90) or the second webs (94) has at least one straight-lined segment (93)
- the openings (90) have a rounded contour,
- the minimum width of the second webs (94) is equal to or less than twice the thickness of the element (1)
- the second webs (94) have a length that is at least twice the thickness of the element (1)
- the element (1) is chemically or thermally toughened,
- a compressive stress zone effected by a toughening has a depth that is less than half of the minimum web width of the first and second webs (92, 94).

10. The element (1) according to one of the preceding claims, **characterised in that** at least a part of the number of openings 90 is filled with plastic.

11. The element (1) according to the preceding claim, comprising at least one of the following features:
- the reaction force due to a deflection of the element (1) is changed by at most 30% with respect to an element (1) without plastic present in the openings (90)
- the plastic (30) is transparent,
- the plastic (30) matches the refractive index of the brittle material of the element (1),
- the plastic (30) contains an elastomer,
- the plastic (30) contains silicone.

12. The element according to one of the preceding claims, wherein the element is chemical toughened and has at least one of the following features:
- the element has a compressive stress higher than 100 MPa, preferably higher than 250 MPa,
- the element has a compressive stress lower than 1500 MPa, preferably lower than 1300 MPa
- the DoL is higher than 1 µm, preferably higher than 3 µm,
- the DoL is lower than 0.4·t, preferably lower than 0.3·t,
- the chemically toughened structured first section can be bent with a bending radius below 500t, preferably below 30t without breakage, where t is the glass thickness.

13. The element according to one of the preceding claims, **characterized by** at least one of the following features:
- the first section (9) is structured so that the stresses at the surfaces generated by bending are reduced by at least 50% compared to an unstructured element of the same thickness,
- the first section (9) is structured so that the stress at the surface of the first section due to bending changes by at most 10% within a thickness range of the element from 200 µm to 2 mm.

14. An article (2) comprising a flat element (1) according to one of the preceding claims, comprising at least two sections movable with respect to each other.

15. The article according to the preceding claims, whereby the flat element (1) is bent and folded at the first section so that the surfaces of the second sections (11, 13) of one of the sides (3, 5) face each other.

16. The article (2) according to the preceding claim, comprising at least one of the following features:
- the flat element (1) is bent so that the surfaces of the second sections (11, 13) facing each other are parallel or are positioned in an acute angle,
- the surfaces of the second sections (11, 13) facing each other are positioned so close together that the first section (9) bulges outward so that the thickness of the folded flat element is larger at the first section (9) than at the boundary lines (15) between the first section (9) and the second sections (11, 13), or at a position where the second sections (11, 13) are opposed
- the element 1 forms one layer of a sandwich structure,
- at least one side (3, 5) of the element 1 being laminated to an organic layer, in particular a plastic layer (35).
- the laminate comprises a glass sheet (37) laminated to the element (1),
- the article (2) is a foldable display,
- the article (2) has a push switch, wherein the push button of the push switch is formed by one of the second sections (11, 13).

17. A method for producing an element (1) of an anorganic brittle material according to one of claims 1 to 13 with the following steps:
- providing a plate shaped element (1) of a brittle material,
- directing and focusing the laser beam of a ultrashort pulsed laser (49) onto the element (1), the laser beam (50) having a wavelength at which the brittle material of the element (1) is transparent so that the laser beam (50) can penetrate into the element (1),
- the laser beam (50) being focused to produce an elongated focus (52) within the element (1), the intensity of the laser beam (50) being sufficient to produce a filament shaped damage zone (57) within the element (1) along the focus (52),
- the laser beam (50) being moved relative to the element to insert a plurality of filament shaped damage zones (57) side by side along a multitude of ring shaped paths,
- etching by exposing the element to an etchant, the etchant intruding into the filament shaped damage zones (57) so that the filament shaped damage zones (57) are widened to form channels which combine due to the widening, so that the part of the element encompassed by the ring shaped paths detaches and openings (90) is produced so that least three sections are formed including a first section (9) and two second sections (11, 13), the second sections adjoining the first section so that the first section (9) is arranged between the second sections (11, 13), the first section (9) comprising the openings (90) so that the first section (9) has a higher flexibility than the second sections (11, 13).
